# EUROPEAN PATENT SPECIFICATION

(11) **EP 0 450 258 B1**
(45) Date of publication and mention of the grant of the patent: **21.09.1994**
(21) Application number: 90830141.9
(22) Date of filing: 04.04.1990
(51) Int. Cl.: H05C 1/04, A01M 29/00

(54) **Electrical system adapted to keep pigeons away from buildings**
Elektrische Anlage zum Fernhalten von Tauben von Bauwerken
Système électronique apte à repousser les pigeons des bâtiments

(43) Date of publication of application: 09.10.1991
(73) Proprietor: DITTA ETTORE GALLIANI, Milano (IT)
(72) Inventor: Galliani, Ettore, Milano (IT)
(74) Representative: Mercurio, Franco

(56) References cited:
- EP-A- 0 328 866
- CH-A- 557 137
- DE-A- 3 914 894
- DE-C- 920 623
- US-A- 2 647 228

## Description

This invention concerns mainly an electrical system for keeping pigeons or other birds away from buildings, in particular from the fronts and from the architectural details of said buildings while, on the other hand, the pidgeons or other birds are not subjected to any material damage nor to even the slightest shock.

As it is known, there is a remarkable damage caused to the buildings by the deposits left by pigeons, in particular to the artistic public property comprising churches, monumental buildings and other public buildings, hospitals and residential buildings.

There are embodiments and methods already practiced in this art for keeping pigeons away from buildings, but they have not provided final results and some of them have proved damaging to the pigeons while others, in the long run, have proved damaging to the architectural details they were supposed to protect. Among the above embodiments, it deserves a particular attention the one based on ultrasonic waves. After a certain time though this method becomes ineffective, because the pigeons get accustomed and in addition the use thereof is not advisable in cities where it can become a nuisance if it is desired to have such an intensity to become at least slightly bothersome for the pigeons.

There should also be recalled herein the passive protection method, based on tight wires, spikes and so on. This method acquires a certain value if it is used as a support for an active protective method, but it can be used only for moderate importance protections.

A further method which was used at least in the past is the deposition of sticky pastes on the parts to be protected. Today it is not even allowed and furthermore, as the months go by its effectiveness gets strongly reduced whereby eventually, after a little longer than one year, the action thereof becomes insignificant. Therefore, after a certain time, it is necessary to protect again the architectural details with the paste, and meanwhile they remain all smeared in that the pastes blacken and melt down.

Eventually, the method of the slippery silicon pastes does not have the disadvantage of entangling the pidgeons, but with this system as well, as time goes by, the protective action is progressively reduced, until it becomes ineffective. These pastes as well blacken, they melt and definitely smear the datails they are supposed to protect.

An electrical system is also known, as disclosed in DE-A-39 14894, adapted to keep away the pigeons when the latter go to perch with their legs on protective lines located a short distance from each other and fastened to the buildings to be protected. This system comprises a pulse generator producing high voltage pulses of short duration and therewith also low power connected to the protective lines.

But this system has the drawback that no means are provided to enable the most appropriate voltage in relation to the length and configuration of the protective lines.

It is an object ot this invention to eliminate the above mentioned drawbacks, by providing an electric system comprising a pulse generator producing high voltage pulses of short duration and therewith also low power and connected to protective lines which are fastened to the building characterized in that at the outlet from the pulse generator there is provided a pair of electrical circuits having a voltage different from each other and adapted to be alternatively connected to said protective lines in order to enable the most appropriate voltage to be used, according to the lenght and configuration of the protective lines.

The features and the advantages of this invention will become apparent from the following detailed description of a non exclusive preferred embodiment of the subject system, shown for purely exemplary and non limiting purposes in the attached drawing, wherein:
Figure 1 shows the electrical block diagram of the subject electrical system;
Figure 2 shows the application of the subject electrical system to various architectural details to be protected; and
Figures 3, 4, 5 show three examples of protective lines of the subject electrical system.

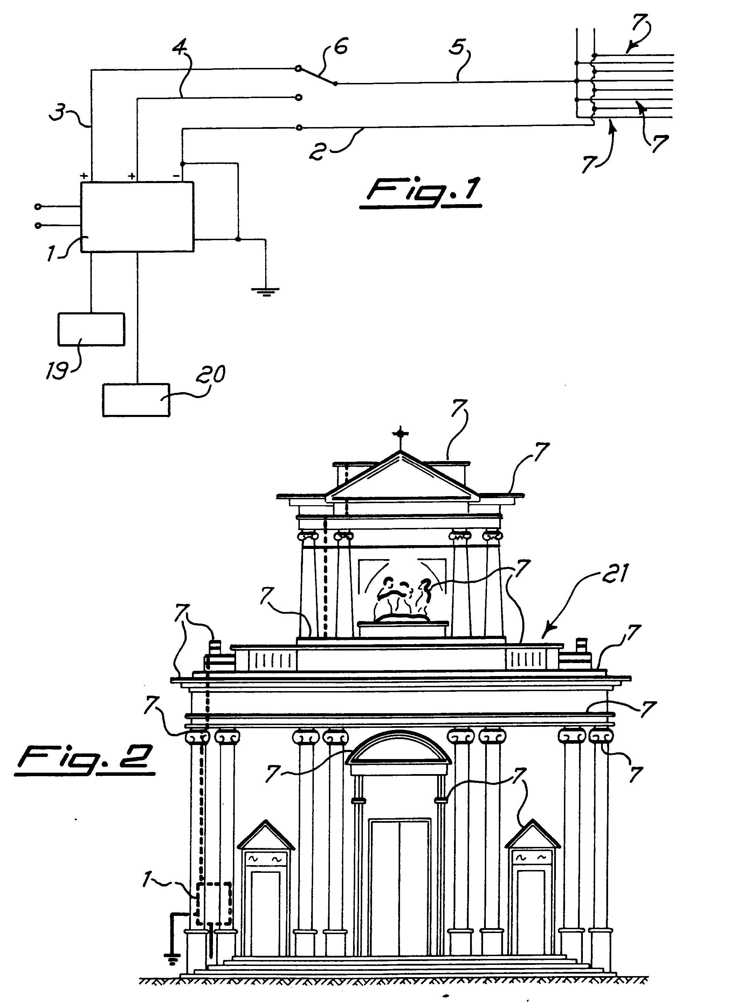

Referring now to Figure 1, the block diagram of the electrical circuit for the subject system shows, connected to each other, an electrical pulse generator 1 and two electrical circuits comprising common conductor 2 and conductors 3 and 4 respectively. Both conductor 3 and conductor 4 may be connected to conductor 5 by means of switch 6, whereby the circuit comprising conductors 2 and 5 feeds protective lines 7 at different voltages.

Electrical pulse generator 1, fed from the alternate current grid, or by direct current batteries, provides said electrical circuit 2, 5 with high voltage pulses having a low electrical power and a short duration. In particular this circuit may be operated at different voltages in order to be able to use the voltage which is most appropriate relative to the length and configuration of protective lines 7. For instance, the operation voltage for circuit 3, 5, 2 used for an average size protective system is approximately 6000V, while it is 5000V if used in a large size protective system. In the same way, the operating voltage of circuit 4, 5, 2 in the case of a medium size system is about 4500V, while in the case of a large size system it is about 3800V. Nevertheless it should be noted that in some particular cases said voltages may be reduced also drastically. The frequency of the high voltage pulses is approximately 50 pulses per minute while each pulse duration is about 0,55 to 0,7 milliseconds, according to a lower or upper limit of the protective line length. The power involved is very low, in that a pulse electrical charge is about 0,3 to 0,4 millicoulomb, since the pulse generator comprises a static electronic apparatus and is based on a charge and discharge sequence, at the frequency of 50 pulses per minute, of suitable capacity condensers.

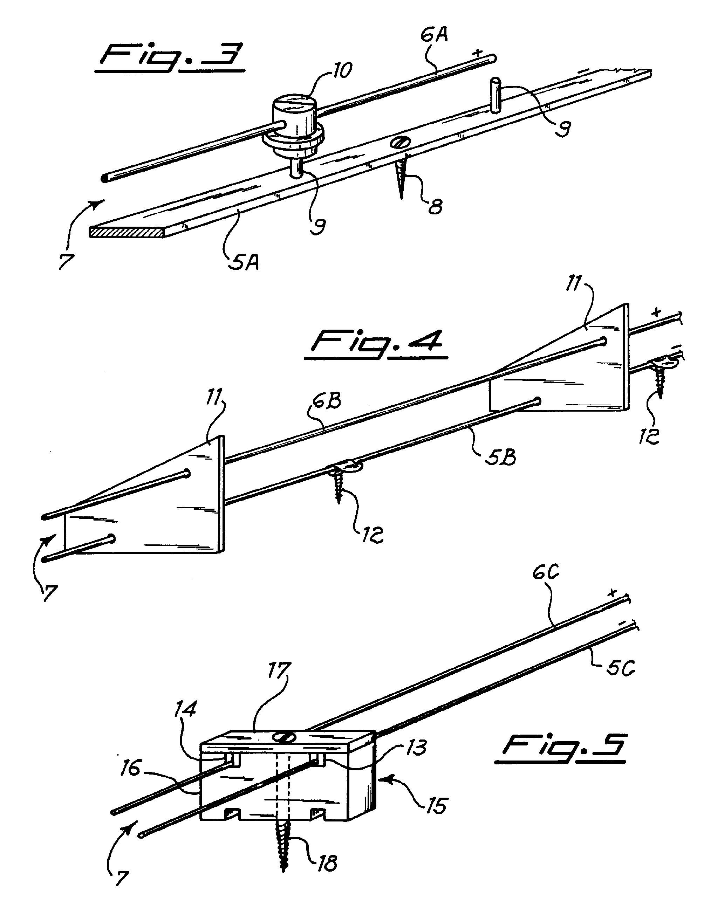

Protective lines 7 may be different types and in Figures 3, 4 and 5 three types are shown, for exemplary purposes. Referring now to Figure 3, conductor 5 comprises strap wire 5A which is fastened to the portion of building to be protected by means of screws 8 and it is connected to the negative terminal of generator 1. Strap wire 5A carries pins 9, uniformly spaced from each other, and bearing special purpose insulators 10, adapted to prevent surface discharge and leakage currents also in the most adverse weather conditions. On said insulators there is fastened conductor 6A, connected to the positive terminal of generator 2.

Referring now to Figure 4, the pair of conductors 5B and 6B comprising part of protective line 7, are supported by pass-through insulators 11 made of transparent and insulating material. The lower position conductor, shown at 5B in the Figure, is connected to the negative terminal of generator 1, while the one in the upper position, shown at 6B, is connected to the positive terminal of generator 1. For fastening the protective line to the architectural structures, lower conductor 5B is mounted on said structures by means of screws and bands 12.

Referring now to Figure 5, conductors 5C and 6C of protective line 7 are led through pairs of grooves 13 and 14 respectively, provided on the upper part of insulators 15, only one of which is shown in Figure 5. Each said insulators 15 are comprised of a slab 16 and a small plate 17, both of them being made of an insulating and transparent material. Small plate 17 closes up the top of grooves 13 and 14 and is locked on top of the slab by a screw 18 which at the same time is used to fasten insulator 15 to the building portion to be protected.

Fastening of protective lines 7 onto the architectural details to be protected may be performed as well by means of special corrosion resitant resins, replacing the screws.

The subject electrical system may be comprised of multiple sections, each including a set of protective lines, and in such a case each section is fed by its own pulse generator.

The latter approach enbles as well the system operation to be partitioned, by keeping in operation only selected sections, according to need, or by switching the generators from one section to the other, since they are interchangeable.

In addition, the above system is supposed to be completed by providing timers 19, one of which is shown in the diagram of Figure 9, connected to generator 1, in order to connect or disconnect electrical power to the various sections, according to an operating schedule which may be pre-arranged. Furthermore, there is provided an alerting or warning, visually or acoustically operating device 20 (Figure 1), which is in turn connected to the pulse generator, in order to give a warning in case the latter goes off.

In Figure 2 it is apparent how protective lines 7 are fastened to the various details of building 21, in such a way that the voltage applied to the conductors of protective lines 7 keeps away the pidgeons when they try to perch with their legs on said lines which are installed close to each other, their distance being such that both conductors come in contact with the pidgeon legs. Practical or embodimental modifications may be made to this invention while not exceeding the scope thereof, as defined in the attached claims.

## Claims

1. An electrical system adapted to keep pigeons or other birds away from buildings comprising a static electrical pulse generator (1) producing high voltage pulses of short duration and low electrical power whereby said voltage, applied to protective lines (7) adapted to be fastened to portions of the buildings to be protected, keeps the pigeons away when the latter try to perch with their legs on said protective lines (7) located a short distance from each other, characterized in that at the outlet from the electrical pulse generator (1) there is provided a pair of electrical circuits (3, 5, 2; 4, 5, 2) adapted to be alternatively connected to said protective lines (7) and said electrical circuit have a voltage different from each other in order to enable the most appropriate voltage to be used, according to the length and configuration of the protective lines (7).

2. The electrical system of Claim 1, characterized in that said protective lines (7) comprise a strap wire (5A) fastened to the portion of the building to be protected and connected to the negative terminal of the generator (1), said strap wire (5A) carrying insulators (10) fastened thereto and bearing a conductor (6A) connected to the positive terminal of the generator (1).

3. The electrical system of Claim 1, characterized in that said protective lines (7) comprise a pair of conductors (5B, 6B) supported by pass-through type insultors (11) of an insulating transparent material, wherein the lower positioned conductor (5B) is fastened to the portion of the building to be protected and is connected to the negative terminal of the generator (2), while the conductor (6B) in the upper position is connected to the positive terminal of the generator (2).

4. The electrical system of Claim 1, characterized in that said protective lines (7) comprise a pair of conductors (5C, 6C) respectively connected to the negative and to the positive terminal, passing through a pair of grooves (13, 14) provided in the top portion of the insulators (15) comprising insulating and transparent material slabs (16) and small plates (17) of insulating and transparent material adapted to top off said grooves (13, 14) and locked on said slab (16) by means of a screw (18) which in turn fastens the insulator (15) to the portion of the building to be protected.

5. The electrical system according to the previous Claims, characterized in that it includes several sections, each comprising protective lines (7), each section being fed by a generator (1).

6. The electrical system of Claim 5, characterized in that a timer (19) is connected to the generators (1) in order to switch on or off the electrical supply to the various sections, according to a predetermined schedule.

7. The electrical system of the previous Claims, characterized in that a visual or acoustical alerting or warning device (20) is connected to the generator (1) in order to give a warning if the latter should fail.

8. The electrical system of Claim 1, characterized in that the operating voltage of said electrical circuits (3, 5, 2; 4, 5, 2) is normally about 3800V to 6000V, the high voltage pulse frequency is about 50 pulses per minute, the duration of each pulse is 0,55 to 0,7 milliseconds depending upon the shorter or longer extension of the protective lines (7), the electrical power used is low since the pulse electrical discharge is about 0,3 to 0,4 millicoulomb and the pulse generator (1) comprises a static electronic device based on a sequence of charge and discharge of suitable capacitors, at a frequency of 50 pulses per minute.

## Patentansprüche

1. Elektrische Anlage zum Fernhalten von Tauben oder anderen Vögeln von Bauwerken, mit einem statischen, elektrischen Impulsgenerator (1), der Hochspannungsimpulse kurzer Dauer und geringer elektrischer Leistung an Schutzleitungen (7) anlegt, die an zu schützenden Bauwerksteilen befestigt werden können, um die Tauben oder andere Vögel abzuhalten, wenn diese versuchen, mit ihren Beinen auf den mit kurzem gegenseitigen Abstand angeordneten Schutzleitungen (7) zu sitzen, **dadurch gekennzeichnet,** daß am Ausgang des elektrischen Impulsgenerators (1) ein Paar elektrischer Schaltungen (3, 5, 2; 4, 5, 2) angeordet ist, die abwechselnd mit den Schutzleitungen (7) zu verbinden sind, und voneinander verschiedene Spannung abgeben, um abhängig von der Länge und der Konfiguration der Schutzleitungen (7) auswahlsweise die geeignetste Spannung zu verwenden.

2. Elektrische Anlage nach Anspruch 1, **dadurch gekenn****zeichnet,** daß die Schutzleitungen (7) einen Bandleiter (5A) aufweisen, der am zu schützenden Bauwerksteil zu befestigen und mit dem negativen Anschluß des Generators (1) zu verbinden ist, wobei der Bandleiter (5A) an ihm befestigte Isalotoren (10) trägt, die einen Leiter (6A) halten, der mit dem positiven Anschluß des Generators (1) verbunden ist.

3. Elektrische Anlage, nach Anspruch 1, **dadurch gekenn****zeichnet,** daß die Schutzleitungen (7) ein Paar Leiter (5B, 6B) aufweisen, die von Durchleitungsisolatoren (11) aus einem isolierenden, transparenten Material gehalten werden, wobei der untere Leiter (5B) mit dem zu schützenden Bauwerksteil befestigt ist und mit dem negativen Anschluß des Generators (2) verbunden ist, während der obere Leiter (6B) mit dem positiven Anschluß des Generators (2) verbunden ist.

4. Elektrische Anlage nach Anspruch 1, **dadurch gekenn****zeichnet,** daß die Schutzleitungen (7) ein Paar Leiter (5C, 6C) aufweisen, die jeweils mit dem negativen bzw. positiven Anschluß verbunden sind und durch ein Paar Nuten (13, 14) gehen, die im oberen Teil von Xsolatoren (15) angeordnet sind, die Klötzchen (16) aus isolierendem, transparentem Material sowie kleine Platten (17) aus isolierendem, transparentem Material aufweisen, die so ausgebildet sind, daß sie die Nuten (13, 14) abdecken, und die am Klötzchen (16) durch eine Schraube (18) befestigt sind, die ihrerseits den Isolator (15) am zu schützenden Bauwerksteil befestigt.

5. Elektrische Anlage nach einem der vorstehenden Ansprüche, **dadurch gekennzeichnet,** daß sie mehrere Abschnitte aufweist, von denen jeder über Schutzleitungen (7) verfügt und jeder durch einen Generator (1) versorgt wird.

6. Elektrische Anlage nach Anspruch 5, **dadurch gekenn****zeichnet,** daß ein Timer (19) mit den Generatoren (1) verbunden ist, um die elektrische Versorgung zu den verschiedenen Abschnitten abhängig von einem vorgegebenem Zeitplan ein- oder auszuschalten.

7. Elektrische Anlage nach den vorstehenden Ansprüchen, **dadurch gekennzeichnet,** daß eine optische oder akustische Alarm- oder Warnvorrichtung (20) mit dem Generator (1) verbunden ist, um eine Warnung auszugeben, falls der letztere ausfallen sollte.

8. Elektrische Anlage nach Anspruch 1, **dadurch gekenn****zeichnet,** daß die Betriebsspannung der elektrischen Schaltungen (3, 5, 2; 4, 5, 2) normalerweise 3800 V bis 6000 V beträgt, wobei die Frequenz der Hochspannungsimpulse ungefähr 50 Impulse pro Minute beträgt, mit einer Dauer jedes Impulses von 0,55 bis 0,7 Millisekunden, die von einer kürzeren oder längeren Erstreckung der Schutzleitungen (7) abhängt, wobei die verwendete elektrische Leistung gering ist, da die elektrische Entladung bei einem Impuls ungefähr 0,3 bis 0,4 Millicoulomb beträgt, und der Impulsgenerator (1) eine statische, elektronische Vorrichtung aufweist, die mit einer Folge von Lade- und Entladevorgängen geeigneter Kondensatoren mit einer Frequenz von 50 impulsen pro Minute arbeitet.

## Revendications

1. Un système électrique approprié pour repousser les pigeons ou autres volatiles des bâtiments comprenant un générateur d'impulsions électriques à semi-conducteur (1) produisant des impulsions à haute tension de courte durée et de faible énergie électrique, de sorte que ladite tension, appliquée à des lignes de protection (7) appropriées pour être fixées à des parties des bâtiments à protéger, repousse les pigeons quand ces derniers essaient de se percher avec leurs pattes sur lesdites lignes de protection (7) disposées à courte distance les unes des autres, caractérisé en ce qu'à la sortie du générateur d'impulsions électriques (1), il est prévu une paire de circuits électriques (3, 5, 2 ; 4, 5, 2) appropriés pour être connectés en alternance auxdites lignes de protection (7) et lesdits circuits électriques présentent chacun une tension différente de l'autre afin de permettre d'utiliser la tension la plus appropriée, selon la longueur et la configuration des lignes de protection (7).

2. Le système électrique de la revendication 1, caractérisé en ce que lesdites lignes de protection (7) comprennent un fil nu (5A) fixé à la partie du bâtiment à protéger et connecté à la borne négative du générateur (1), ledit fil nu (5A) portant des isolateurs (10), qui y sont fixés, et portant un conducteur (6A) connecté à la borne positive du générateur (1).

3. Le système électrique de la revendication 1, caractérisé en ce que lesdites lignes de protection (7) comprennent une paire de conducteurs (5B, 6B) supportés par des isolateurs (11), du type perçé, en matière isolante transparente, dans lequel le conducteur (5B) positionné plus bas est fixé à la partie du bâtiment à protéger et est connecté à la borne négative du générateur (1), tandis que le conducteur (6B) en position supérieure est connecté à la borne positive du générateur (1).

4. Le système électrique de la revendication 1, caractérisé en ce que lesdites lignes de protection (7) comprennent une paire de conducteurs (5C, 6C) respectivement connectés à la borne négative et à la borne positive, passant à travers une paire d'encoches (13, 14) prévues dans la partie supérieure des isolateurs (15) comprenant des blocs (16) en matière isolante et transparente et des petites plaques (17) en matière isolante et transparente, appropriées pour recouvrir lesdites encoches (13, 14) et verrouillées sur ledit bloc (16) au moyen d'une vis (18) qui, à son tour, fixe l'isolateur (15) à la partie du bâtiment à protéger.

5. Le système électrique selon les revendications précédentes, caractérisé en ce qu'il inclut plusieurs sections, comprenant chacune des lignes de protection (7) chaque section étant alimentée par un générateur (1).

6. Le système électrique de la revendication 5, caractérisé en ce qu'une minuterie (19) est connectée aux générateurs (1) afin d'enclencher ou de désenclencher l'alimentation électrique vers les différentes sections selon un programme prédéterminé.

7. Le système électrique des revendications précédentes, caractérisé en ce qu'un dispositif (20) d'alerte ou d'avertissement acoustique ou visuel est connecté au générateur (1) afin de prévenir en cas de défaillance de ce dernier.

8. Le système électrique de la revendication 1, caractérisé en ce que la tension de fonctionnement desdits circuits électriques (3, 5, 2 ; 4, 5, 2) est normalement de l'ordre de 3800 V à 6000 V, la fréquence des impulsions à haute tension est d'environ 50 impulsions par minute, la durée de chaque impulsion est de 0,55 à 0,7 milliseconde en fonction de l'extension plus ou moins longue ou courte des lignes de protection (7), l'énergie électrique utilisée est faible étant donné que la décharge électrique d'impulsions est de l'ordre de 0,3 à 0,4 millicoulomb et le générateur d'impulsions (1) comprend un dispositif électronique à semi-conducteur basé sur une séquence de charge et de décharge de condensateurs appropriés à une fréquence de 50 impulsions par minute.
